(19) Europäisches Patentamt
European Patent Office
Office européen des brevets

(11) **EP 1 972 085 B1**

(12) **EUROPEAN PATENT SPECIFICATION**

(45) Date of publication and mention
of the grant of the patent:
**05.01.2011 Bulletin 2011/01**

(51) Int Cl.:
***H04B 10/20*** (2006.01)  ***H04J 14/00*** (2006.01)

(21) Application number: **06809869.8**

(86) International application number:
**PCT/IL2006/001313**

(22) Date of filing: **14.11.2006**

(87) International publication number:
**WO 2007/074432 (05.07.2007 Gazette 2007/27)**

(54) **OPTICAL COMMUNICATION NETWORK AND METHOD OF ROUTING IN THE NETWORK**

OTPISCHES KOMMUNIKATIONSNETZ UND VERFAHREN ZUM ROUTEN IN DEM NETZ

RÉSEAU DE COMMUNICATION OPTIQUE ET PROCÉDÉ DE ROUTAGE DANS LE RÉSEAU

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.12.2005 IL 17285605**

(43) Date of publication of application:
**24.09.2008 Bulletin 2008/39**

(73) Proprietor: **ECI Telecom Ltd.
Petach-Tikva 49517 (IL)**

(72) Inventors:
• **ZAACKS, Mark Raymond
49315 Petach Tikva (IL)**
• **GUTIN, Michael
49670 Petach Tikva (IL)**
• **MAHLAB, Uri
60414 Or Yehuda (IL)**

(74) Representative: **Modiano, Micaela Nadia et al
Modiano Josif Pisanty & Staub Ltd
Thierschstrasse 11
80538 München (DE)**

(56) References cited:
**EP-A- 1 341 334          WO-A-00/10038
WO-A2-02/15441          US-A- 5 760 941
US-A1- 2004 037 500**

**Description**

**Field of the invention**

The present invention relates to a communication network allowing transmission between nodes thereof by means of short and ultra short pulses, and to a method of routing in such a network.

**Background of the invention**

JP 11215103A2 describes a device for multiplexing plural optical signals, in the form of short light pulse trains, on a dispersion axis. The multiplexing is provided by adding a variance (different amounts) of dispersion to respective different pulse trains at a transmitting side, and adding the same variance but of an opposite sign of dispersion at the receiving side, and applying multiple separation to them. The solution of JP 11215103A2 is applicable to the case of end-to end transmission.

US 20040208608 describes a dispersion compensation architecture for a switch ready optical network including an identified, switch-ready optical network region having a maximum propagation length, a dispersion section of the region having a section length, and dispersion compensation measures operably applied to said dispersion section, wherein the dispersion compensation measures are selected based on at least one determined regional target value of regional aggregated dispersion, the section length, and the maximum propagation length.

WO 0215441A2 describes a tunable dispersion compensation module which can be used to determine a desired- dispersion compensation value for a transmission path. In one aspect, the tunable dispersion compensation module comprises at least one variable coupler that is capable of receiving one or more optical signals and providing the signals to a first path having a first dispersion, or second path having a second dispersion. Once the desired value is determined, a connectable compensation module is configured to provide the optimal dispersion compensation value determined using the tuneable module. The connectable module may include a reconfigurable connector that is capable of receiving one or more optical signals and providing the signals to a first path having a first dispersion and a second path having a second dispersion. As is the case with the tunable module, multiple stages can be provided to the connectable module to achieve desired range and/or granularity of dispersion.

The above known techniques solve each its specific problem.

To the best of the Applicant's knowledge, the relevant prior art does not comprise references, which would approach the new task and the new solution which will be proposed below.

**Object and summary of the invention**

The object of the present invention is to provide a new technique for communication using ultra short pulses in an optical communication network, and a new telecommunication network enabling such communication.

The above object can be achieved by providing a network comprising a plurality of network nodes interconnected to one another by at least one optical fiber link along which an optical communication channel is extended, said channel being characterized by having a single optical wavelength, and wherein:

each of at least two network nodes out of said plurality being operative as a transmitting node capable of generating a first short pulse optical signal and transmitting it along said optical communication channel towards other network nodes of the plurality, and wherein each of the at least two network nodes being adapted to perform transmission at a different bit rate than the other;

at least one of the other network nodes being operative as a receiving node, is designated to receive transmissions from at least one of said transmitting nodes via said communication channel in a form of a second short pulse optical signal, and wherein said at least one receiving node being provided with a dispersion compensation module adapted to compensate dispersion created in the optical fiber along said optical channel extending between said at least one of said transmitting nodes and said at least one receiving node, thereby ensuring selective receipt, in a restored form, of transmissions comprised in said second optical signal and directed to said at least one receiving node.

According to one embodiment, the network is for example, a ring-like or a mesh-like network comprising a plurality of network nodes including transmitting nodes and receiving nodes interconnected to one another by optical fiber links and via an optical communication channel, said channel being characterized by a single optical wavelength; in the network:

each of the transmitting nodes being capable of generating a first short pulse optical signal and transmitting it via said optical communication channel towards other network nodes, different transmitting nodes being adapted to perform transmission at arbitrary bit rates;

each of said receiving nodes is assigned to receive a second short pulse optical signal from a particular transmitting node via said communication channel, and being provided with a dispersion compensation module adapted to compensate dispersion created in the optical fiber along a communication path via said optical channel between said particular transmitting node and said receiving node, thereby ensuring receipt of said second optical signal in the restored form at said receiving node, while any other short pulse optical signals to which said receiving node is not assigned are received as noise (preferably, low interference noise),

the network allows preventing interference of different short pulse signals having arbitrary bit rates, and detecting any of said signals at an arbitrary receiving node of the network without reconfiguring the network.

It is understood that any particular network node may constitute a transmitting node and/or a receiving node.

It should be noted that other receiving nodes of the network (not assigned to said second optical signal), will receive it as a low power noise due to not performing dispersion compensation matching for the specific distances of that nodes from the transmitting node.

The above network thereby allows performing a so-called dispersion based routing by "broadcasting" of a short pulse optical signal from a transmitting node via an optical communication channel to all network nodes to which that channel arrives, and by further adjustment of dispersion compensation modules at one or more assigned receiving nodes to exact lengths of selected routes between the transmitter node and the assigned receiver node(s). The mentioned broadcasting in the network can be ensured, say, by branching optical fibers at the network nodes using optical couplers and splitters.

It should be emphasized that the proposed solution enables building the network without filters and add drop equipment at the nodes, which fact drastically simplifies the network and reduces its cost.

Picking only the required signal by a matching dispersion compensation module becomes possible owing to a very special feature of transmitting ultra short pulses: when affected by chromatic dispersion in a communication line, ultra short pulses become severely distorted and the power of the short pulses averages over the bit period so that when the dispersion matching condition does not exist, their energy become noise. In networks transmitting short pulses, exact dispersion matching allows for restoring the shape of ultra short pulses thereby recovering the desired signals. It should be noted, however, that the optical signals can be amplified along the single wavelength optical line quite easily, for example using remotely or locally pumped Erbium Doped Fiber Amplifiers.

The dispersion compensation module can be switcheable. Preferably, it is tunable to take into account possible fluctuations in dispersion of the fibers due to temperature, stress, aging, etc.

According to the preferred embodiment of the network, lengths of communication paths to be distinguished at any of said one or more receiving nodes by the dispersion compensation module of the node should differ from one another for of about 1 km or more. The minimal difference is pointed out as an example only, and should be specifically selected for each specific network, taking into account typical dispersion length of its links, depending on transmitters' parameters - pulse width, chirp, bit rate, etc.

The mentioned short pulse optical signals should be understood as formed by short or ultra short optical pulses of RZ (return to zero) type. For example, the pulses having duration in the order of picoseconds and extinction ratio (power of logical "1'/power of logical "0") no less than 10dB can be used for the proposed technology.

The short pulse signals in the network will preferably be transmitted at different bit rates, which is advantageous from the point of judicial bandwidth distribution taking into account bandwidth limitations and available equipment, from the point of minimizing prices of equipment, and from the point of maximally reducing noise in the network. Indeed, short pulse signals having low bit rate provide lower noise power to "neighboring signals" in the network during any specific time period (window), and require less expensive transmitting equipment than short pulse signals having higher bit rate.

Preferably, the network is provided with power equalization means ensuring that a group of short pulse optical signals incoming a specific network node and then leaving said network node in a form of a combined optical signal transmitted via a common optical fiber link, have substantially equal peak powers in the combined optical signal.

Since the peak energy of a short pulse optical signal can generally be written down as $P_{i\,av}/BR_i$, where $P_{i\,av}$ - average power of the incoming signal (i) and $BR_i$ is the bit rate of the incoming signal (i), the power equalizing means at each node, where a group of short pulse signals is joined into a combined outgoing signal, should be operative to equalize powers of these signals substantially according to the following equation:

$$P_{1\,av}/BR_1 = P_{2\,av}/BR_2 = P_{3\,av}/BR_3 \; ... = P_{n\,av}/BR_{n,} \qquad (1)$$

where

$$BR_1 + BR_2 + BR_3 + \ldots + BR_n = \leq BR_{max} \qquad\qquad (2)$$

*and* $BR_{max}$ is a design rule characteristic selected to minimize bit error rate (BER).

One group of the above-mentioned optical signals incoming the node should be understood as comprising short pulse optical signals incoming the node from various optical fiber links and/or short pulse signals added at that node (say, transmitted from that node); as has been mentioned, the optical signals of the group are to be joined i.e., egress from that node together, via a common optical fiber link (naturally, via a common optical channel in said link). In a mesh network, more than one groups of separate optical signals may be defmed at one network node; the above-mentioned power equalizing rule is to be kept for each of said groups. Different groups may have different ratios of $P_i$ /$BR_i$, but within one and the same group the ratio $P_i$/$BR_i$ is to be maintained constant.

It should be noted that more than one short pulse optical signals may enter a network node via one and the same optical fiber link in the form of an incoming combined signal (i). In this case, the average power $P_{i\ av}$ of such a combined incoming signal (i) is a sum of average powers of its component signals, and the $BR_i$ of this combined incoming signal(i) is a sum of bit rates of its component signals.

In the above case it should be kept in mind that a) peak powers of the component signals in such a combined signal are considered to be already equalized at a preceding node; b) that the total sum of the joined bit rates of any combined signal (incoming or outgoing) should be less than *BRmax*.

To perform the power equalization, the following measures can be undertaken: average power $P_{i\ av}$ of a particular signal can be increased or decreased by affecting its transmitter, using fixed or variable optical splitters, optical couplers, optical attenuators or amplifiers; bit rate $BR_i$ of a specific signal can be changed at the transmitting node as required by the bandwidth allocation.

The network preferably comprises a network management system (NMS) responsible for controlling said power equalization means at the network nodes. The NMS can be of a centralized type or of a distributed type, and is to be operative to obtain information on different short pulse signals incoming and outgoing each particular network node. The information comprises at least bit rate $BR_i$ of each particular short pulse signal, and average power $P_{i\ av}$ of a single or combined signal (i) incoming a node via a specific incoming link . According to one embodiment, such information can be provided by preliminarily tagging different short pulse signals having different $BR_i$ say, by modulating thereof at the transmitting nodes using different low frequency tones, and by further detection of the modulation tones at the intermediate and receiving network nodes for creating and updating a traffic map of the network.

Owing to the broadcast character of transmission in the proposed network, the network intrinsically comprises alternative paths (at least a first and a second paths) via which a short pulse optical signal from a particular transmitting node may arrive to a particular receiving node. In one - preferred- embodiment, the dispersion compensation module for detecting the required short pulse optical signal at a receiving node may comprise a number of sections respectively tuned to a number of the alternative paths to simultaneously receive from them a number of copies of said required signal. The receiving network node may further comprise equipment for comparison and/or averaging, and/or determining Bit Error Rate (BER), and/or phase matching, and/or mutual correlating of the received copies - so as to finally select the best quality signal copy (say, from the point of Signal to Crosstalk ratio, from the point of BER) and/or to finally obtain a copy of the required signal, being inspected and repaired from the point of errors. This embodiment is the most advantageous since it allows obtaining highly reliable traffic protection in the network.

In another embodiment, the dispersion compensation module can be selectively adjustable to compensate either dispersion created in a required short pulse optical signal when passing along a main communication path, or dispersion created in the required short pulse optical signal when passing along any alternative communication path.

Selection of a new communication path may be triggered by failing to detect the required optical signal expected from the communication path to which the dispersion compensation unit is currently matched.

In yet a further embodiment, the dispersion compensation module can be adapted to iteratively adjust the dispersion so as to match any possible and preliminarily known path via which the required signal still arrives to the receiving node ("scanning the network"). If the required signal is received via more than one path, the best quality signal is to be selected at the receiving node.

Preferably, the receiving node can be equipped with at least one so-called searchable absorber, capable of suppressing signals weaker than a pre-determined power threshold, if such are incidentally restored by the dispersion compensation module. Such weak signals are considered to be so-called looped signals.

For arranging the described type communication, including the dispersion based routing in a mesh network, at least one optical communication channel should be provided and dedicated for such a purpose.

However, the optical fiber links in the network may support a multi-channel optical transmission system, where each of the optical channels can be used in the way described above, to transmit at least one short pulse optical signal from each transmitting node of the network. Such a network would present a new kind of hybrid "WDM - dispersion communication" network.

In one alternative modification of the network, the network comprises means for time division multiplexing of the optical signals transmission. In one embodiment, the means for time division multiplexing enable transmission of the short pulse optical signals from different transmission nodes at respective different time slots. Alternatively or in addition, the means for time division multiplexing may enable transmission of a number of different short pulse signals from one and the same transmitting node in different time slots.

As has been mentioned above, each of the transmission nodes of the network can be adapted to transmit a number of short pulse optical signals via one and the same said optical communication channel. To allow separation (distinguishing) of said signals at the time of launching, the node may be either provided with time division multiplexing means for transmitting different signals in different time slots. Alternatively, the node may comprise units inserting different starting values of dispersion into "n" different short pulse signals, for example to achieve widening of "n-1" signals immediately at the transmitting node, thus preventing overlapping of peak pulses of different outgoing optical signals in the common combined signal.

According to a second aspect of the invention, there is provided a method for communication in an optical network, preferably a mesh or ring-like optical network, comprising a plurality of network nodes including network nodes operative as transmitting nodes and network nodes operative as receiving nodes, the plurality of network nodes being interconnected by one or more optical fiber links and via an optical communication channel provided along said one or more links, wherein said channel is characterized by a single optical wavelength, the method comprises:

assigning for each node operative as a transmitting node one or more nodes operative as receiving nodes, and for each node operative as a receiving node - at least one communication path extending between said node operative as a receiving node and a specific node operative as a transmitting node;

transmitting, from at least two nodes operative as transmitting nodes, short pulse optical signals via said optical communication channel nodes at different bit rates;

compensating, at each of the nodes operative as receiving nodes, dispersion accumulated in a short pulse optical signal transmitted from one of said at least two nodes operative as transmitting nodes, upon passing one of said at least one assigned communication paths. The method thereby enables restoration of the short pulse optical signal at the receiving node, while not restoring and thus neglecting other undesired optical signals due to non-compensated dispersion thereof.

Preferably, the method comprises preventing mutual interference of the different short pulse signals in the network;

The step of preventing mutual interference of the different short pulse signals can preferably be provided by performing power equalization at one or more network nodes, by ensuring that a group of short pulse optical signals incoming a specific network node and then leaving said network node in a form of a combined optical signal transmitted via a common optical fiber link, have substantially equal peak powers in the combined optical signal.

The power equalization can be performed substantially according to the following equation (1):

$$P_{1\,av}/BR_1 = P_{2\,av}/BR_2 = P_{3\,av}/BR_3 = P_{i\,av}/BR_i = ... = P_{n\,av}/BR_{n,} \qquad (1)$$

where

$$BR_1 + BR_2 + BR_3 + ... + BR_i + ... + BR_n = \leq BR_{max} \qquad (2)$$

and where: $P_{i\,av}/BR_i$ is the peak power of a short pulse optical signal;

$P_{i\,av}$ - is average power of the incoming signal (i),

$BR_i$ is the bit rate of the incoming signal (i), and

$BR_{max}$ is a design rule characteristic selected to minimize bit error rate (BER).

According to a most practical version of the method, at least one of the incoming shot pulse optical signals (i) is a combined incoming signal(i), and the average power $P_{i\,av}$ of such a combined incoming signal (i) is a sum of average powers of its component signals, and the bit rate $BR_i$ of said combined incoming signal (i) is a sum of bit rates of its component signals.

To perform the power equalization, the following steps can be undertaken: increasing or decreasing average power $P_{i\,av}$ of a particular optical signal(i) by affecting its transmitter(s) or using an amplifier; bit rate $BR_i$ of a specific signal(i) can be changed.

For the purpose of network management the method may comprise a step of preliminarily tagging different short pulse signals (say, by modulating thereof at the transmitting nodes using different low frequency tones), and a consequent step of detecting the modulation tones at network nodes for creating and updating a traffic map of the network.

The method may comprise detection of two or more copies of a required short pulse optical signal incoming a specific receiving node from two or more alternative paths in the network, by providing a selectively tunable said dispersion compensation module.

Said detection of the two or more copies can be substantially simultaneous, and be followed by processing such as: comparison from the point of Signal to Noise ratio (Signal to Crosstalk ratio), from the point of Bit Error Rate (BER), and/or averaging and/or correlating said two or more copies - for obtaining a best quality copy, an averaged copy and/or even a copy "with errors corrected" of the required short pulse signal.

Alternatively, said detection of the two or more copies can be performed in sequence (iteratively). In other words, the method may comprise a step of adjusting the dispersion compensation in a pre-determined order to detect arrival of the optical signal via any of the communication paths which are preliminarily known (assigned) to the receiving node. This step can be compared with scanning the network for the signal to be received by iteratively adjusting dispersion compensation means so as to match any possible path via which the signal still arrives to the receiving node.

Still further, detection of a next copy can be performed whenever one of the alternative paths in the network fails.

According to another version of the method, the step of preventing interference of different optical signals in the network comprises performing time division multiplexing in the network. The time division multiplexing may comprise enabling transmission of the short pulse optical signals from different transmission nodes at respective different time slots. Alternatively, or in addition, the time division multiplexing may allow transmission of a number of different short pulse optical signals from one and the same transmitting node in different time slots.

For networks with long communication distances (paths longer than 100 km), the method preferably comprises fine tuning of the dispersion at the receiving nodes, to overcome dispersion fluctuations due to temperature, stress, fiber aging, bending, etc.

Both with respect to the proposed method and the described network, the following should be noted. If, for example, two or more transmitting nodes are equally spaced from a particular receiving node, and one of the transmitting nodes should not interfere the particular receiving node, the distances can artificially be made different, by intentionally introducing, say, different spare portions of optical fiber or dispersion compensation modules between the transmitting nodes and the receiving node, for changing dispersion of optical fiber links there-between and induce the required dispersion difference.

The method may additionally comprise a step of suppressing short pulse optical signals weaker than a pre-determined threshold, if such weaker signals are restored by the dispersion compensation module, since they are considered to be either random or looped signals.

It should be noted that the invention is most advantageous in middle range networks where so-called optical fiber distances between nodes are of about 100 km, and where the minimal difference between the distances is of about 1 km. However, the given numerical values are exemplary, depend on parameters of optical fibers, laser transmitters etc., and are to be pre-selected for each specific network.

When necessary, optical amplifiers (preferably remotely or locally pumped EDFA or Raman amplifiers) can be used for amplifying all the signals in the optical channel to overcome losses in links, splitters, couplers and DCMs (dispersion compensation modules).

Details of the invention will become clearer as the description proceeds.

**Brief description of the drawings**

The invention will further be described and illustrated with the aid of the following non-limiting drawings.

**Fig. 1** is a pictorial diagram of an exemplary fragment of a mesh network according to the invention.

**Figs. 2 to 5** present computer simulations of propagation of optical signals S1 and S2 in the optical network shown in Fig. 1, namely:

**Fig. 2a** illustrates a time diagram of a short pulse signal S1 detected at a receiving node N4 upon matching its dispersion compensation module to the path N1-N3-N4. No power equalization is provided in the network.

**Fig. 2b** illustrates a time diagram of an original short pulse optical signal S1 transmitted from a transmitting node N1, as shown in Fig. 1;

**Fig. 3a** is a time diagram of the short pulse signal S1 detected at a receiving node N4 upon matching its dispersion compensation module to the path N1-N3-N4, when power equalization is provided in the network (namely at the network node N3).

**Fig. 3b** is equal to Fig. 2b and is given for comparison with Fig. 3a.

**Fig. 4a** is a time diagram of the short pulse signal S1 detected at a receiving node N4 upon matching its dispersion compensation module to the alternative path N1-N2-N3-N4, and when power equalization is provided in the network.

**Fig. 4b** is equal to Fig. 2b and is given for comparison with Fig. 4a.

**Fig. 5a** is a time diagram of a short pulse signal S2 detected at a receiving node N4 upon matching its dispersion compensation module to the path N3-N4, and when power equalization is provided at the node N3.

**Fig. 5b** - illustrates a time diagram of the original short pulse signal S2 shown in Fig. 1 as being added to node N3.

**Detailed description of the preferred embodiments**

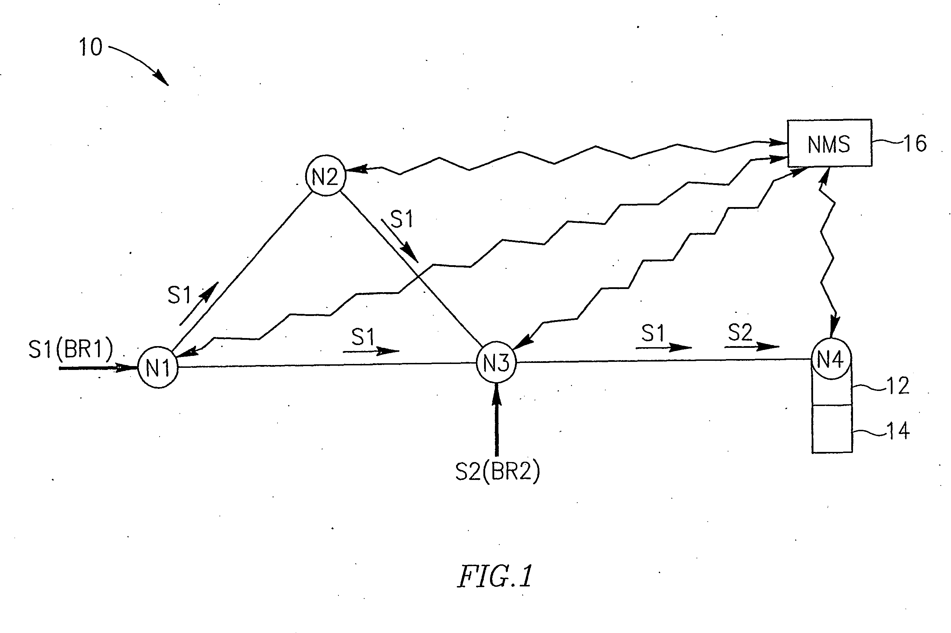

**Fig. 1** illustrates a fragment 10 of an optical mesh network, formed between network nodes N1, N2, N3 and N4 interconnected by optical fiber links. In this example, the fiber links have equal lengths (40 km each) and provide a single optical channel (one optical carrier wavelength). The network comprises a transmitting node N1 from which a short pulse optical signal S1 is broadcasted in the network. A second short pulse optical signal S2 is added to the node N3. Node N4 is a receiving node provided with two controllable dispersion compensation modules (schematically shown as 12 and 14) which are respectively adapted to detect S1 and S2 by adjusting dispersion of the modules to transmission paths via which the signals S1 and S2 may arrive to the node N4. It can be added that bit rate of S2 is 4 times higher than the bit rate of S1 (in this example, S1 has bit rate of about 20 GHz, and S2 has bit rate of about 80 GHz). NMS 16 is responsible for observing the network for building and updating the traffic map, for power equalization at nodes where different signals are joined. It can also be responsible for remote control of dispersion compensation modules at the receiving network nodes. However, control of the dispersion compensation modules can be provided at the respective receiving nodes locally.

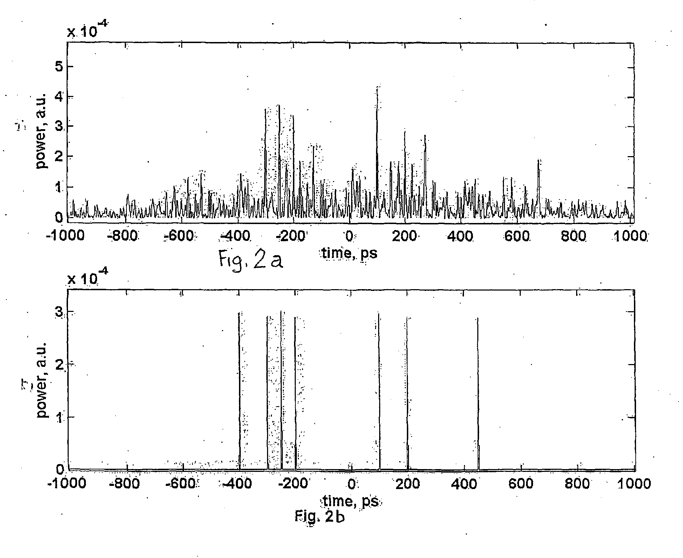

**In Figs. 2 to 5,** time diagrams of original short pulse signals are marked "b" and present references to respective diagrams "a" which show the received and restored optical signals, upon being transmitted via the network.

**Fig. 2b** illustrates the short pulse optical signal S1 outgoing from node N1 and having bit rate BR1. The peak power of the binary "1" pulses is the maximal available (the signal is not yet distorted).

**Fig. 2a** illustrates how the signal S1 is received at N4 upon performing dispersion compensation by the module 12, according to the main path N1-N3-N4 of the signal S1 (the dispersion compensating module 12 is adjusted to the length of the main path being 80 km). It can be seen that though the signal S1 is generally restored, considerable noise and even possible errors are created by the dispersion distorted signals S2 and the signal S1 arriving from the alternative path N1-N2-N3-N4.

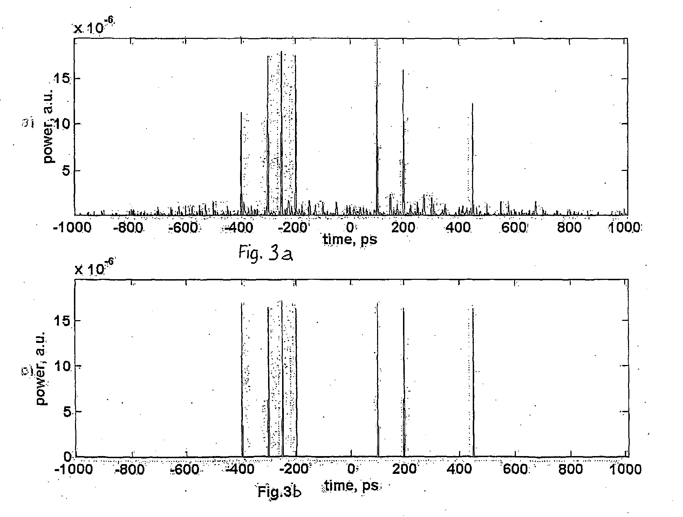

**Fig. 3a** illustrates how the received signal S1 is improved upon performing power equalization of interfering incoming signals at node N3. At node N3, ratios of average powers of the incoming signals to their respective bit rates are taken into account:

$$\{[Pav\ of\ S1\ (main)]/BR1 = [P\ av\ of\ S1(alternative)]/BR1 = [P\ av\ of\ S2]/BR2\}$$

to create the outgoing combined signal in the fiber link N3 - N4.

It is kept in mind that $BR1+BR1+BR2$ (in the link N3-N4) $\leq BR_{max}$. To perform the power equalization, the following measures can be undertaken: average power $P_{i\ av}$ of a particular signal can be increased or decreased by affecting its transmitter or controlling an amplifier/an attenuator, by using fixed or variable optical splitters or couplers; bit rate $BR_i$ of a specific signal can be changed at its transmitting node, taking into account bandwidth allocation. It can be seen, that the resulting detected signal S1 is much more clear and clean than that of Fig. 2a.

In practice, it should be noted that:

- $BR_{max}$ depends on the type and quality of lasers used in the network, and on the type of a particular optical fiber link. If the fiber links (spans) are of one and the same type, $BR_{max}$ of the network = const.
- the bit rate values $BR_i$ in the equations (1) and (2) can be further accompanied by combined weight coefficients to reflect impacts of the following factors: a) quality of laser at the transmitting node, b) sensitivity of dispersion compensation module at the target receiving node. For example, the smaller is the pulse width, and the larger is extinction ratio $ER$ of the pulse $(ER=Power\ "1"/Power\ "0")$, the higher bit rate can be used by that laser. However, the poorer the quality of the dispersion compensation module at a receiving node, the lower the bit rate which can be used for the signal to be detected at that receiving node.

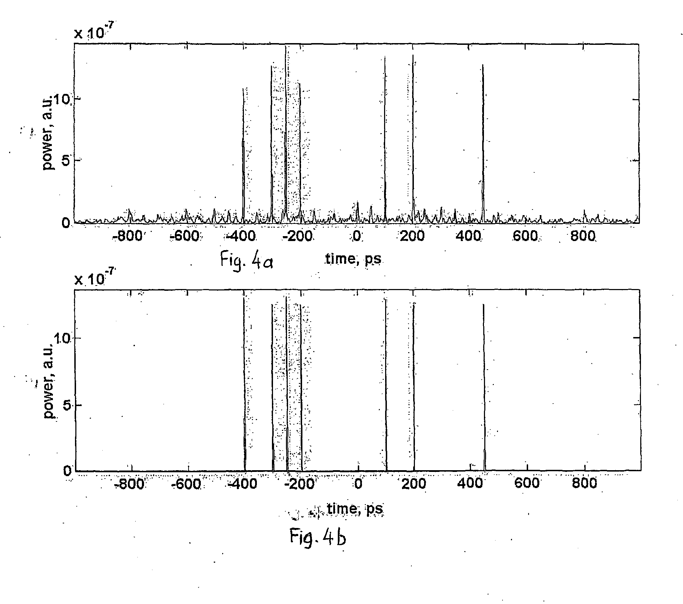

**Fig. 4b** illustrates that the signal S1 can be received at the node N4 also from the alternative path N1-N2-N3-N4, if the dispersion compensation module 12 is adjusted to the distance of this alternative path (120 km). The power equalization is performed as before, and the signal seems clear though peak powers' values are differently distributed over the signal.

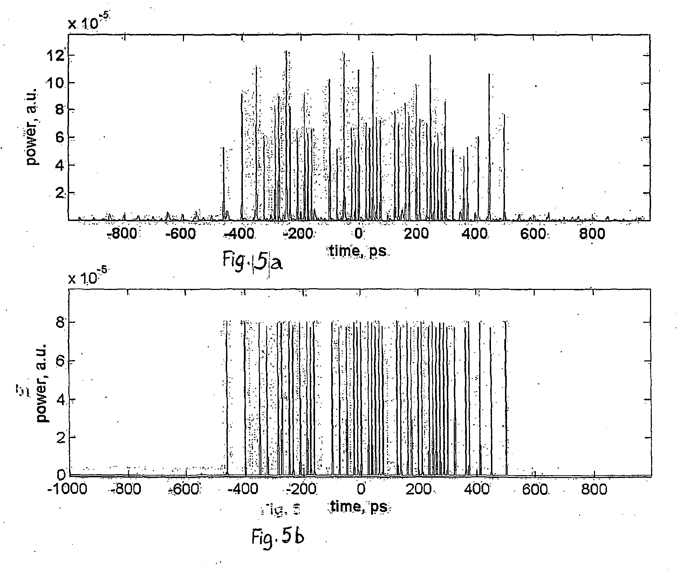

**Fig. 5b** illustrates a time diagram of the optical signal S2 having bit rate BR2 four times higher than the bit rate BR1.
**Fig. 5a** illustrates that upon adjustment of the dispersion compensation module 14 at the receiving node N4 to the path N3-N4 (40 km), and when performing power equalization at N3 (with the aid of the NMS 16), the signal S2 is received at N4 with quite satisfying quality.

While the invention is disclosed in the detailed description with reference to a limited number of specific implementations, it should be appreciated that other means and measures exist for preventing interference and ensuring reliable detection of short pulse signals in the proposed dispersion compensation based optical network, and these measures are to be considered part of the invention.

**Claims**

1.  A network comprising a plurality of network nodes interconnected to one another by at least one optical fiber link along which an optical communication channel is extended, said channel being **characterized by** having a single optical wavelength, and wherein:

    each of at least two network nodes out of said plurality being operative as a transmitting node capable of generating a first short pulse optical signal and transmitting it along said optical communication channel towards other network nodes of the plurality, and wherein each of the at least two network nodes being adapted to perform transmission at a different bit rate than the other;
    at least one of the other network nodes being operative as a receiving node, is designated to receive transmissions from at least one of said transmitting nodes via said communication channel in a form of a second short pulse optical signal, and wherein said at least one receiving node being provided with a dispersion compensation module adapted to compensate dispersion created in the optical fiber along said optical communication channel extending between said at least one of the transmitting nodes and said at least one receiving node, thereby ensuring selective receipt, in a restored form, of the transmissions comprised in said second optical signal at said at least one receiving node.

2.  The network according to Claim 1, wherein said dispersion compensation module is switcheable and/or tunable.

3.  The network according to any one of the preceding claims, provided with power equalization means ensuring that a group of short pulse optical signals incoming a specific network node and then leaving said network node in a form of a combined optical signal transmitted via a common optical fiber link, have substantially equal peak powers in the combined optical signal.

4.  The network according to Claim 3, comprising a network management system (NMS) responsible for controlling said power equalization means at the network nodes, said NMS being operative to obtain information on different short pulse signals incoming and outgoing each particular network node for creating and updating a traffic map of the network.

5.  The network according to any one of the preceding claims, wherein said dispersion compensation module is adjustable to detect a required short pulse optical signal received at the receiving node from two or more alternative communication paths.

6.  The network according to any one of the preceding claims, supporting a multi-channel optical transmission system, where each of the optical channels is used for communication by means of said short pulse optical signals between the transmitting nodes and the receiving nodes of the network.

7.  The network according to Claim 1, comprising means for time division multiplexing of the optical signals transmission.

8.  A method for communication in an optical network, comprising a plurality of network nodes including network nodes operative as transmitting, nodes and network nodes operative as receiving nodes, the plurality of network nodes being interconnected by one or more optical fiber links and via an optical communication channel provided along said one or more links, wherein said channel is **characterized by** a single optical wavelength, the method comprises:

assigning for each node operative as a transmitting node one or more nodes operative as receiving nodes, and for each node operative as a receiving node - at least one communication path extending between said node operative as a receiving node and a specific node operative as a transmitting node;

transmitting, from at least two nodes operative as transmitting nodes, short pulse optical signals via said optical communication channel at different bit rates;

compensating, at each of the nodes operative as receiving nodes, dispersion accumulated in a short pulse optical signal transmitted from one of said at least two nodes operative as transmitting nodes, upon passing one of said at least one assigned communication paths.

9. The method according to Claim 8, comprising a step of preventing mutual interference of the different short pulse signals by performing power equalization at one or more network nodes by ensuring that a group of short pulse optical signals incoming a specific network node and then leaving said network node in a form of a combined optical signal transmitted via a common optical fiber link, have substantially equal peak powers in the combined optical signal.

10. The method according to Claim 8 or 9, further providing network management using preliminarily tagging different short pulse signals for creating and updating a traffic map of the network.

11. The method according to Claim 10, comprising modulating different short pulse signals at the corresponding transmitting nodes using different low frequency tones, and consequently detecting the modulation tones at other network nodes.

12. The method according to any one of Claims 8 to 11, further comprising detecting of at least one alternative copy of a required short pulse optical signal incoming a specific receiving network node from at least one alternative path in the network, by a tunable said dispersion compensation module of the specific receiving network node.

13. The method according to Claim 8, comprising a step of preventing mutual interference of different optical signals in the network by performing time division multiplexing in the network.

14. The method according to any one of Claims 8 to 13, comprising adjusting configuration of the network in case where two or more transmitting nodes are equally spaced from a particular receiving node, while one of the transmitting nodes should not interfere the particular receiving node, the adjustment of the configuration comprises artificially introducing dispersion difference in communication paths between said two or more transmitting nodes and the receiving node.

**Patentansprüche**

1. Ein Netzwerk, das eine Vielzahl von Netzknoten umfasst, die miteinander durch mindestens eine optische Faserleitung verbunden sind, entlang derer sich ein optischer Kommunikationskanal erstreckt, wobei der Kanal **dadurch gekennzeichnet ist, dass** er eine einzige optische Wellenlänge hat, und worin:

jeder von mindestens zwei Netzknoten aus der Vielzahl als ein sendender Knoten arbeitet, der in der Lage ist, ein erstes kurz gepulstes optisches Signal erzeugen und es entlang dem optischen Kommunikationskanal zu anderen Netzknoten der Vielzahl zu senden, und worin jeder der mindestens zwei Netzknoten ausgebildet ist, um das Senden mit einer anderen Bitrate durchzuführen als der andere;

wobei mindestens einer der anderen Netzknoten, der als ein empfangender Knoten arbeitet, dazu bestimmt ist, Sendungen von mindestens einem der sendenden Knoten über den Kommunikationskanal in Form eines zweiten kurz gepulsten optischen Signals zu empfangen, und wobei der mindestens eine empfangende Knoten mit einem Streuungskompensationsmodul ausgestattet ist, das ausgebildet ist, um die Streuung, die in der optischen Faser entlang dem optischen Kommunikationskanal erzeugt wird, der sich zwischen dem mindestens einen der sendenden Knoten und dem mindestens einen empfangenden Knoten erstreckt, zu kompensieren, um so an dem mindestens einen empfangenden Knoten einen selektiven Empfang, in wiederhergestellter Form, der Sendungen sicherzustellen, die in dem zweiten optischen Signal enthalten sind.

2. Das Netzwerk gemäß Anspruch 1, wobei das Streuungskompensationsmodul schaltbar und/oder abstimmbar ist.

3. Das Netzwerk gemäß einem beliebigen der obigen Ansprüche, das mit Leistungsausgleichsmitteln ausgestattet ist, die sicherstellen, dass eine Gruppe von kurzen gepulsten optischen Signalen, die in einen bestimmten Netzknoten eingehen und dann den Netzknoten in Form eines kombinierten optischen Signals verlassen, das über eine gemeinsame optische Faserleitung gesendet wird, im Wesentlichen gleiche Spitzenleistungen im kombinierten optischen Signal haben.

4.  Das Netzwerk gemäß Anspruch 3, das ein Netzverwaltungssystem (network management system, NMS) umfasst, welches dafür zuständig ist, die Leistungsausgleichsmittel an den Netzknoten zu steuern, wobei das NMS arbeitet, um Informationen über verschiedene kurz gepulste Signale zu erhalten, die in jedem einzelnen Netzknoten ein- und ausgehen, um eine Verkehrskarte des Netzwerks zu erstellen und zu aktualisieren.

5.  Das Netzwerk gemäß einem beliebigen der obigen Ansprüche, wobei das Streuungskompensationsmodul anpassbar ist, um ein erforderliches kurz gepulstes optisches Signal zu erfassen, das am empfangenden Knoten von zwei oder mehr alternativen Kommunikationswegen empfangen wird.

6.  Das Netzwerk gemäß einem beliebigen der obigen Ansprüche, das ein optisches Mehrkanal-Sende-System unterstützt, worin jeder der optischen Kanäle zur Kommunikation mit Hilfe der kurz gepulsten optischen Signale zwischen den sendenden Knoten und den empfangenden Knoten des Netzwerks verwendet wird.

7.  Das Netzwerk gemäß Anspruch 1, das Mittel für den Zeitmultiplexbetrieb des Sendens optischer Signale umfasst.

8.  Ein Verfahren zur Kommunikation in einem optischen Netzwerk, das eine Vielzahl von Netzknoten umfasst, einschließlich Netzknoten, die als sendende Knoten arbeiten, und Netzknoten, die als empfangende Knoten arbeiten, wobei die Vielzahl von Netzknoten durch eine oder mehrere Faserleitungen und über einen optischen Kommunikationskanal, der entlang der einen oder mehreren Leitungen bereitgestellt sind, miteinander verbunden sind, wobei der Kanal durch eine einzige optische Wellenlänge **gekennzeichnet** ist;
    wobei das Verfahren folgendes umfasst:

    die Zuweisung für jeden Knoten, der als sendender Knoten arbeitet, eines oder mehrerer Knoten, die als empfangende Knoten arbeiten, und für jeden Knoten, der als empfangender Knoten arbeitet - mindestens eines Kommunikationswegs, der sich zwischen dem Knoten, welcher als empfangender Knoten arbeitet, und einem bestimmten Knoten, welcher als sendender Knoten arbeitet, erstreckt;
    das Senden, von mindestens zwei Knoten, die als sendende Knoten arbeiten, von kurz gepulsten optischen Signalen über den optischen Kommunikationskanal mit verschiedenen Bitraten;
    die Kompensation, an jedem der Knoten, die als empfangende Knoten arbeiten, der Streuung, die sich in einem kurz gepulsten optischen Signal angesammelt hat, das von einem der mindestens zwei Knoten gesendet wurde, die als sendende Knoten arbeiten, nach dem Passieren eines der mindestens einen zugewiesenen Kommunikationswege.

9.  Das Verfahren gemäß Anspruch 8, das einen Schritt des Verhinderns gegenseitiger Interferenz der verschiedenen kurz gepulsten Signalen umfasst, durch Durchführung von Leistungsausgleich an einem oder mehreren Netzknoten durch Sicherstellung, dass eine Gruppe von kurz gepulsten optischen Signalen, die in einen bestimmten Netzknoten eingehen und dann den Netzknoten in Form eines kombinierten optischen Signals verlassen, das über eine gemeinsame optische Faserleitung gesendet wird, im Wesentlichen gleiche Spitzenleistungen im kombinierten optischen Signal haben.

10. Das Verfahren gemäß Anspruch 8 oder 9, das weiter für Netzverwaltung sorgt, unter Nutzung der vorläufigen Kennzeichnung von verschiedenen kurz gepulsten Signalen zur Erstellung und Aktualisierung einer Verkehrskarte des Netzwerks.

11. Das Verfahren gemäß Anspruch 10, das Folgendes umfasst: die Modulation von verschiedenen kurz gepulsten Signalen an den entsprechenden sendenden Knoten mit Hilfe verschiedener Töne mit niedriger Frequenz, und die darauf folgende Erfassung der Modulationstöne an anderen Netzknoten.

12. Das Verfahren gemäß einem beliebigen der Ansprüche 8 bis 11, das weiter Folgendes umfasst: den Nachweis mindestens einer alternativen Kopie eines erforderlichen kurz gepulsten optischen Signal, das an einem bestimmten empfangenden Netzknoten von mindestens einem Alternativweg im Netzwerk eingeht, durch eines der abstimmbaren Streuungskompensationsmodule des spezifischen empfangenden Netzknotens.

13. Das Verfahren gemäß Anspruch 8, das einen Schritt des Verhinderns gegenseitiger Interferenz verschiedener optischer Signale im Netzwerk durch Durchführung von Zeitmultiplexing im Netzwerk umfasst.

**14.** Das Verfahren gemäß einem beliebigen der Ansprüche 8 bis 13, das Folgendes umfasst: die Anpassung der Konfiguration des Netzwerks in dem Fall, in dem zwei oder mehr sendende Knoten von einem bestimmten empfangenden Knoten gleich beabstandet sind, während einer der sendenden Knoten nicht mit dem speziellen empfangenden Knoten interferieren sollte; wobei die Anpassung der Konfiguration die künstliche Einführung einer Streuungsdifferenz in Kommunikationswege zwischen den zwei oder mehr sendenden Knoten und dem empfangenden Knoten.

## Revendications

**1.** Réseau, comprenant une pluralité de noeuds de réseau, interconnectés les uns aux autres par au moins une liaison par fibre optique, le long de laquelle un canal de communication optique est étendu, ledit canal étant **caractérisé par** le fait d'avoir une longueur d'onde optique unique, et dans lequel :

chacun des au moins deux noeuds de réseau, parmi ladite pluralité, fonctionnant en tant que noeud d'émission, capable de générer un premier signal optique à impulsions courtes et de le transmettre le long dudit canal de communication optique, vers d'autres noeuds de réseau de la pluralité, et dans lequel chacun des au moins deux noeuds de réseau est adapté pour accomplir une transmission à un débit binaire différent de l'autre ;
au moins l'un des autres noeuds de réseau fonctionnant en tant que noeud de réception, est conçu pour recevoir des transmissions provenant d'au moins l'un des noeuds d'émission, via ledit canal de communication, sous une forme d'un deuxième signal optique à impulsions courtes, et dans lequel ledit au moins un noeud de réception est muni d'un module de compensation de dispersion, adapté pour compenser la dispersion créée dans la fibre optique, le long dudit canal de communication optique s'étendant entre ledit au moins l'un des noeuds d'émission et ledit au moins un noeud de réception, de manière à assurer une réception sélective, sous une forme restaurée, des transmissions comprises dans ledit deuxième signal optique, audit au moins un noeud de réception.

**2.** Réseau selon la revendication 1, dans lequel ledit module de compensation de dispersion est commutable et/ou accordable.

**3.** Réseau selon l'une quelconque des revendications précédentes, muni de moyens d'égalisation de puissance, assurant qu'un groupe de signaux optiques à impulsions courtes, entrant à un noeud de réseau spécifique et quittant ensuite ledit noeud de réseau sous une forme de signal optique combiné, transmis via une liaison par fibre optique commune, présente des puissances de crête sensiblement identiques dans le signal optique combiné.

**4.** Réseau selon la revendication 3, comprenant un system de gestion de réseau (NMS), responsable de la commande desdits moyens d'égalisation de puissance aux noeuds de réseau, ledit NMS fonctionnant pour obtenir de l'information sur différents signaux optiques à impulsions courtes, entrant et sortant de chaque noeud de réseau particulier, pour créer et mettre à jour une carte de trafic du réseau.

**5.** Réseau selon l'une quelconque des revendications précédentes, dans lequel ledit module de compensation de dispersion est ajustable pour détecter un signal optique à impulsions courtes requis, reçu au noeud de réception, de deux canaux de communication alternatifs ou plus.

**6.** Réseau selon l'une quelconque des revendications précédentes, supportant un système d'émission optique multicanaux, dans lequel chacun des canaux optiques est utilisé pour la communication au moyen desdits signaux optiques à impulsions courtes entre les noeuds d'émission et les noeuds de réception du réseau.

**7.** Réseau selon la revendication 1, comprenant des moyens pour un multiplexage par répartition dans le temps de la transmission de signaux optiques.

**8.** Procédé de communication dans un réseau optique, comprenant une pluralité de noeuds de réseau incluant des noeuds de réseau fonctionnant en tant que noeuds d'émission et des noeuds de réseau fonctionnant en tant que noeuds de réception, la pluralité de noeuds de réseau étant interconnectés par une ou plusieurs liaisons par fibre optique et via un canal de communication optique, prévu le long desdites une ou plusieurs liaisons, dans lequel ledit canal est **caractérisé par** une longueur d'onde unique,
le procédé comprenant :

l'affectation, pour chaque noeud fonctionnant en tant que noeud d'émission, d'un ou plusieurs noeuds fonctionnant en tant que noeud de réception, et pour chaque noeud fonctionnant en tant que noeud de réception - au moins un canal de communication s'étendant entre ledit noeud fonctionnant en tant que noeud de réception et un noeud spécifique, fonctionnant en tant que noeud d'émission ;

l'émission, depuis au moins deux noeuds fonctionnant en tant que noeuds d'émission, de signaux optiques à impulsions courtes, via ledit canal de communication optique, à des débits binaires différents ;

la compensation, à chacun des noeuds fonctionnant en tant que noeuds de réception, de la dispersion accumulée dans un signal optique à impulsions courtes émis d'un desdits au moins deux noeuds fonctionnant en tant que noeuds d'émission, lors du passage par l'un desdits au moins deux canaux de communication affectés.

9. Procédé selon la revendication 8, comprenant une étape d'empêchement d'interférence mutuelle des différents signaux à impulsions courtes, par accomplissement d'une égalisation de puissance à un ou plusieurs noeuds de réseau, en assurant qu'un groupe de signaux optiques à impulsions courtes, entrant à un noeud de réseau spécifique et quittant ensuite ledit noeud de réseau sous une forme de signal optique combiné, transmis via une liaison par fibre optique commune, présente des puissances de crête sensiblement identiques dans le signal optique combiné.

10. Procédé selon la revendication 8 ou 9, fournissant en outre une gestion de réseau, en utilisant un étiquetage préliminaire des différents signaux optiques à impulsions courtes, pour créer et mettre à jour une carte de trafic du réseau.

11. Procédé selon la revendication 10, comprenant la modulation des différents signaux optiques à impulsions courtes aux noeuds de transmission correspondants, en utilisant différents sons à basse fréquence, et, par conséquent, en détectant les sons de modulation à d'autres noeuds de réseau.

12. Procédé selon l'une quelconque des revendications 8 à 11, comprenant en outre la détection d'au moins une copie alternative d'un signal optique à impulsions courtes requis, entrant à un noeud de réseau de réception spécifique à partir d'au moins un canal alternatif dans le réseau, par un dit module de compensation de dispersion accordable du noeud de réseau de réception spécifique.

13. Procédé selon la revendication 8, comprenant une étape d'empêchement d'interférence mutuelle de différents signaux optiques, par accomplissement d'un multiplexage par répartition dans le temps dans le réseau.

14. Procédé selon l'une quelconque des revendications 8 à 13, comprenant l'étape d'ajustement de la configuration du réseau dans le cas dans lequel deux noeuds d'émission ou plus sont également espacés d'un noeud de réception particulier, tandis que l'un des noeuds d'émission devrait ne pas interférer avec le noeud de réception particulier, l'ajustement de la configuration comprend l'introduction artificielle d'une différence de dispersion dans les canaux de communication entre lesdits deux ou plus noeuds d'émission et le noeud de réception.

*FIG.1*

EP 1 972 085 B1

Fig. 2a

Fig. 2b

Fig. 3a

Fig.3b

Fig. 4a

Fig. 4b

Fig. 5a

Fig. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11215103 A
- US 20040208608 A

- WO 0215441 A2